# EUROPÄISCHE PATENTSCHRIFT

(11) **EP 0 733 882 B1**
(45) Veröffentlichungstag und Bekanntmachung des Hinweises auf die Patenterteilung: **06.10.1999**
(21) Anmeldenummer: 95104264.7
(22) Anmeldetag: 23.03.1995
(51) Int. Cl.: G01D 5/26, G01P 1/04, G01D 5/02

(54) **Positionsmesseinrichtung**
Position-measuring device
Dispositif de mesure de positions

(43) Veröffentlichungstag der Anmeldung: 25.09.1996
(73) Patentinhaber: RSF-Elektronik Gesellschaft m.b.H., A-5121 Tarsdorf 93 (AT)
(72) Erfinder: Lepperdinger, Gotthard Mag. rer. nat., A-5110 St. Georgen (AT)

(56) Entgegenhaltungen:
- EP-A- 0 382 706
- DE-C- 3 908 260
- PATENT ABSTRACTS OF JAPAN vol. 10 no. 19 (P-423) [2076] ,24.Januar 1986 & JP-A-60 173614 (HITACHI SEISAKUSHO KK) 7.September 1985,

## Beschreibung

Die Erfindung betrifft eine Positionsmeßeinrichtung gemäß dem Oberbegriff des Anspruches 1.

Derartige Positionsmeßeinrichtungen werden insbesondere bei Bearbeitungsmaschinen zur Messung der Relativlage eines Werkzeuges bezüglich eines zu bearbeitenden Werkstücks eingesetzt.

Bei Meßeinrichtungen mit einer Abtasteinheit, die an einer Hilfsführung geführt ist, die von der Führung der beiden Objekte in Form der Maschinenteile getrennt angebracht ist, ist eine gelenkige Ankopplung an das zu messende Objekt bzw. an einen daran angeordneten Mitnehmer unerläßlich.

In der DE-C-26 11 459 ist eine Positionsmeßeinrichtung beschrieben, bei der eine Abtasteinheit zur Abtastung der Teilung eines Teilungsträgers an einer von der Führung der zu messenden Objekte unabhängigen Hilfsführung verschiebbar und an einen Mitnehmer über eine in Meßrichtung steife Kupplung gelenkig angekoppelt ist. Der erste Kupplungsteil dieser Kupplung besteht aus einer Planfläche an der Abtasteinheit, die mit einer sphärischen Fläche des zweiten Kupplungsteils am Mitnehmer mittels einer Feder in ständigem Kontakt steht. Bei der Ankopplungsart treten jedoch durch Parallelversatz und Winkelfehler zwischen der Führung der beiden Objekte und der Hilfsführung Relativbewegungen zwischen der Planfläche und der sphärischen Fläche auf, die durch die auftretende Gleitreibung zu einem Verschleiß dieser beiden Kupplungsteile führen und damit Meßungenauigkeiten zur Folge haben, die bei hochpräzisen Positionsmeßeinrichtungen nicht mehr tolerierbar sind.

Aus der DE-A-32 01 887 ist eine sich gattungsmäßig von Kupplungen der oben beschriebenen Art unterscheidende, spielfreie Kupplung bekannt, bei der ein Drehgelenk mit zwei rotatorischen Freiheitsgraden und zusätzlich eine Linearführung mit zwei translatorischen Freiheitsgraden senkrecht zur Meßrichtung vorgesehen und hintereinandergeschaltet werden. Die Linearführung kann aus einer Magnetplatte und einem mit einer sphärischen Fläche anliegenden Teil bestehen.

Aus der EP-B1-0 382 706 ist ein Längenmeßsystem bekannt, welches einen Maßstab, eine diesem entlang verstellbar geführte Abtasteinheit und einen Mitnehmer aufweist, der über eine spielfreie Kupplung, die aber eine Relativverstellung quer zur Meßrichtung zuläßt, mit der Abtasteinheit gekuppelt ist.

Die beiden Kupplungsteile weisen um normal zur Verstellrichtung verlaufende Achsen gewölbte Eingriffsflächen auf und stehen, einander kreuzend in punktförmigem Eingriff miteinander. Zur Spielfreihaltung der Kupplung dienen Vorspannelemente aus an Mitnehmer und Abtasteinheit einander zugeordnet angebrachten Dauermagneten.

Aus der EP-B1-0 387 488 ist eine Positionsmeßeinrichtung bekannt, bei der die Abtasteinheit an einem Mitnehmer über eine in Meßrichtung steife Kupplung gelenkig angekoppelt ist. Diese Kupplung besteht aus zwei ebenen Platten, die an der Abtasteinheit und am Mitnehmer befestigt sind und zwischen denen eine Kugel durch Zugfedern in ständigem Kontakt mit denselben steht und durch einen Käfig in einer bestimmten Lage gehalten wird. Da bei Relativbewegungen zwischen der Führung und der Hilfsführung die Kugel frei zwischen den beiden ebenen Platten rollen kann, entsteht kein Verschleiß durch Gleitreibung, der der Meßgenauigkeit abträglich ist.

Als weiteren Vorschlag zur Vermeidung von Gleitreibung, ist aus der Zeitschrift "Messen und Prüfen/Automatik" Juli/August 1974, Seiten 435 - 439 bekannt, als Kupplung zwei gekreuzte Rollen vorzusehen, die durch Federn zusammengehalten werden. Andere Lösungen verwenden für die Kupplung knicksteife Drähte und Blattfedern.

Die unterschiedlichen Lösungsvorschläge machen deutlich, daß das Bedürfnis nach einer Kupplung, die möglichst wenige Nachteile hat, schon seit langem besteht.

Der Erfindung liegt die Aufgabe zugrunde eine Positionsmeßeinrichtung mit einer Kupplung zu schaffen, die beweglich, jedoch in Meßrichtung steif ist, mit der eine reibungs- und verschleißarme Verbindung der Bauelemente möglich ist, und die dennoch aus möglichst wenigen, einfachen Bausteinen besteht.

Diese Aufgabe wird bei einer Positionsmeßeinrichtung mit den Merkmalen des Anspruches 1 gelöst.

Die mit der Erfindung erzielten Vorteile bestehen insbesondere darin, daß durch das Vorsehen wenigstens einer Kugel zwischen den Flächen der beiden Kupplungsteile keine Gleitreibung und damit kein Verschleiß an den beiden Kupplungsteilen mehr auftreten kann, so daß die Meßgenauigkeit und die Meßsicherheit nicht beeinträchtigt werden, wobei die Kugel allein durch die Magnetkraft der Kupplungsteile zentriert wird.

Vorteilhafte Ausbildungen der Erfindung entnimmt man den abhängigen Ansprüchen.

Ausführungsbeispiele der Erfindung werden anhand der Zeichnungen näher erläutert.

Es zeigt
- Figur 1: eine Positionsmeßeinrichtung mit einer Kupplung in einer teilweise geschnittenen Seitenansicht,
- Figur 2: eine Prinzipskizze,
- Figur 3: eine schematisierte Seitenansicht bei Parallel-Versatz von Abtasteinheit und Montagefuß,
- Figur 4: eine schematisierte Seitenansicht bei Kippung von Abtasteinheit und Montagefuß,
- Figur 5: eine Draufsicht bei Parallel-Versatz,
- Figur 6: eine Draufsicht bei Kippung und
- Figur 7: eine Kupplungs-Variante.

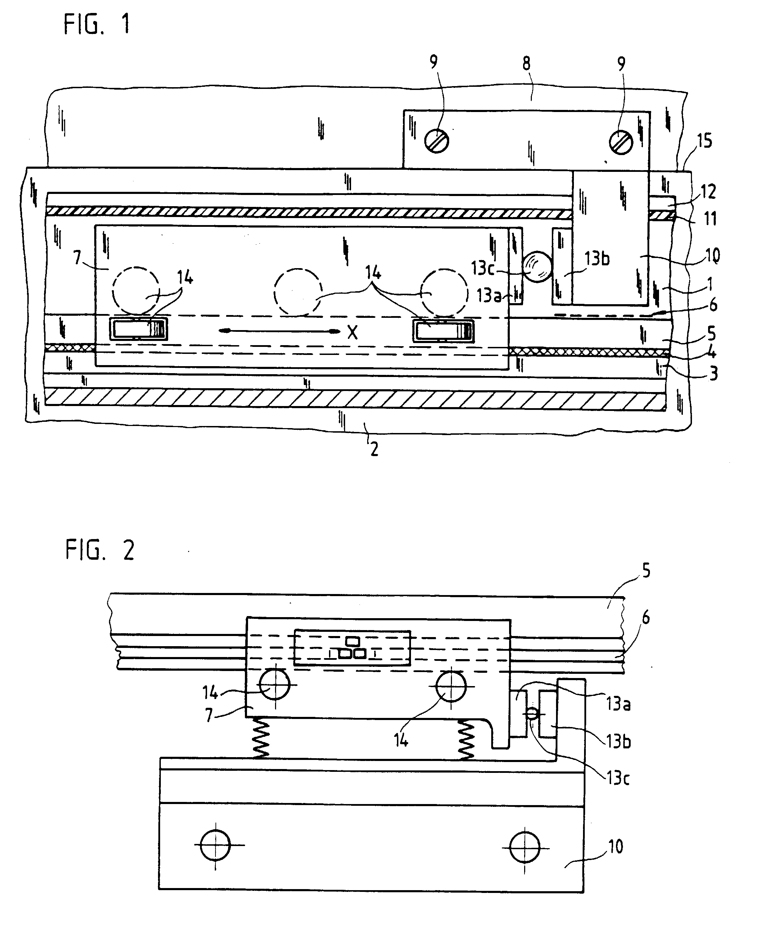

In der Figur 1 ist eine Positionsmeßeinrichtung in einer teilweise geschnittenen Seitenansicht gezeigt, deren Gehäuse 1 an einem Schlitten 2 einer nicht dargestellten Bearbeitungsmaschine in beliebiger Weise befestigt ist. Auf einem Steg 3 im Inneren des Gehäuses 1 ist mittels einer Klebeschicht 4 ein Teilungsträger 5 angebracht, dessen Teilung 6 von einer Abtasteinheit 7 in beliebiger bekannter Weise abgetastet wird.

Am Bett 8 der Bearbeitungsmaschine ist mittels Schrauben 9 ein Mitnehmer 10 befestigt, der durch einen von zwei Dichtlippen 11 verschlossenen Längsschlitz 12 des Gehäuses 1 hindurchgreift und über eine Kupplung 13 mit der Abtasteinheit 7 verbunden ist. Die Abtasteinheit 7 ist mittels Rollen 14 auf zwei Oberflächen des Teilungsträgers 5 geführt, die eine von einer Führung 15 des Schlittens 2 bezüglich des Betts 8 unabhängige Hilfsführung für die Abtasteinheit 7 bilden. Der Schlitten 2 und das Bett 8 der Bearbeitungsmaschine stellen die beiden Objekte dar, deren Relativlage in Meßrichtung X gemessen werden soll.

Die Kupplung 13 besteht aus einem ersten Kupplungsteil in Form einer an der Abtasteinheit 7 befestigten ersten ebenen Platte 13a und aus einem zweiten Kupplungsteil in Form einer am Mitnehmer 10 befestigten zweiten ebenen Platte 13b, die einander zugewandten Plattenebenen der beiden Platten 13a, 13b aus magnetischem Werkstoff verlaufen parallel zueinander und senkrecht zur Meßrichtung X. Zwischen den beiden parallelen Plattenebenen der beiden Platten 13a, 13b befindet sich ein dritter Kupplungsteil in Form einer Kugel 13c, die aufgrund der Magnetkräfte in ständigem Kontakt mit den beiden Plattenebenen steht.

In der Prinzipskizze gemäß Figur 2 ist diese Anordnung nochmals nur mit den notwendigsten Bausteinen gezeigt.

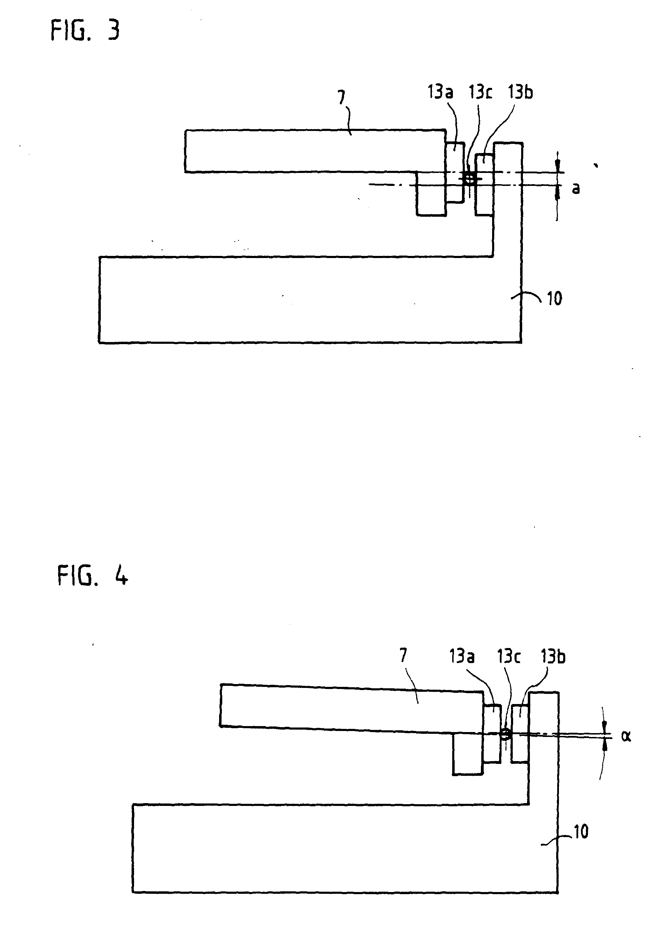

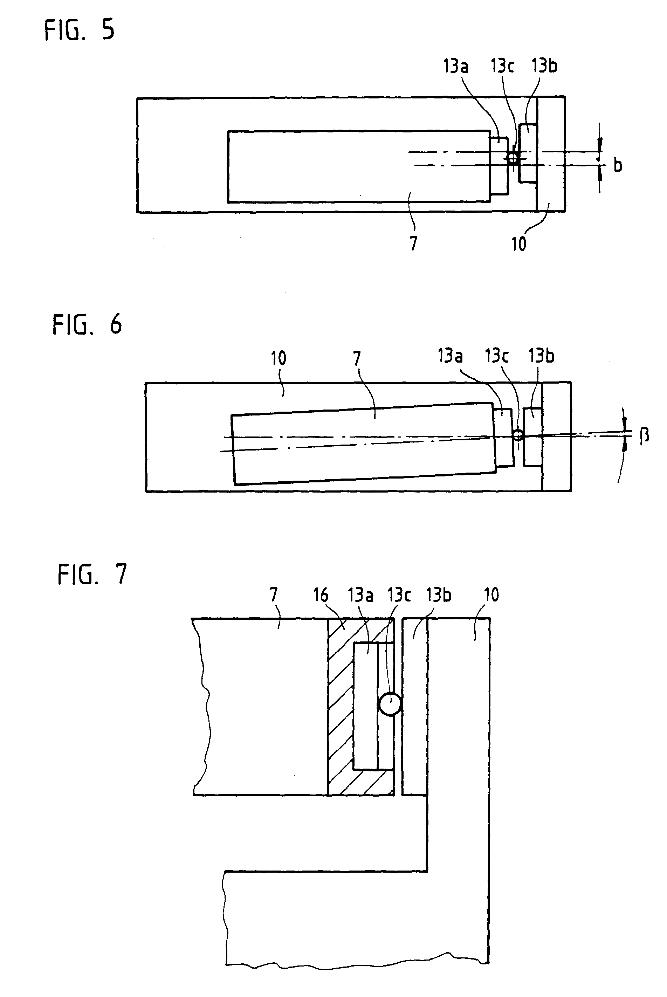

Die Kugel 13c aus ferromagnetischem Material ist zwischen den Magnet-Platten 13a und 13b "frei" beweglich. Das bedeutet, daß die Kugel 13c bei Bewegungen des Mitnehmers 10 relativ zur Abtasteinheit 7 und beispielsweise senkrecht zur Meßrichtung X auf den Magnet-Platten 13a und 13b rollt. Diese Relativbewegung ist in den Figuren 3 und 5 angedeutet. Dabei zeigt Figur 3 einen parallelen Versatz "a" zwischen Abtasteinheit 7 und Mitnehmer 10.

In Figur 4 ist in derselben Ansicht ein Versatz um den Winkel a dargestellt.

Figur 5 zeigt in der Draufsicht eine als Horizontal-Versatz b bezeichnete parallele Verlagerung von Abtasteinheit 7 zu Mitnehmer 10 und in Figur 6 ist eine Verkippung um den Winkel β in dieser Ansicht dargestellt.

Bei einer Schieflage der Magnet-Platten 13a und 13b zueinander, wie dies aus den Figuren 4 und 6 ersichtlich ist, sucht sich die von den Magnet-Platten 13a, 13b gehaltene Kugel 13c ihre Position um so weiter außerhalb ihrer theoretischen Zentrallage, je größer die Schieflage der Magnet-Platten 13a, 13b zueinander ist.

Je kleiner die Kugel 13c ist, desto stärker reagiert sie auf Schieflage der Magnet-Platten 13a, 13b. Andererseits wächst mit zunehmendem Durchmesser der Kugel 13c der Abstand der Magnet-Platten 13a, 13b und damit reduziert sich die Kuppelkraft. Unter der Annahme von kreisscheiben-förmigen Magnet-Platten 13a, 13b erweist sich ein Verhältnis von 1:3 zwischen dem Durchmesser der Kugel 13c zum Durchmesser der Magnet-Platten 13a, 13b als günstig.

Bei größerem Platzangebot kann bei Verwendung von dickeren Magnet-Platten 13a, 13b aufgrund der höheren Magnetkräfte dieses Verhältnis auf 1:2 erhöht werden.

Um jedoch die Baugröße der Kupplung 13 grundsätzlich gering zu halten und dennoch eine genügend große Kuppelkraft zu erreichen empfiehlt es sich, Magnete mit großem Energieprodukt zu verwenden. Dies sind Magnete aus einem Werkstoff wie die "Seltenen Erden", z.B. Samarium-Cobalt (SmCo) oder Neodymium-Eisen-Bor (NdFeB).

Wie in Figur 7 gezeigt ist, kann mit Hilfe eines zusätzlichen ferromagnetischen Körpers 16 die Kupplung 13 noch verbessert werden. Dieser Körper 16 in Form eines Eisenjoches hat eine Doppelfunktion, denn er erhöht die Kuppelkraft und dient außerdem als Auslenkungsbegrenzung für die Kugel 13c bei extremen Beschleunigungen, denen möglicherweise die Positionsmeßeinrichtung ausgesetzt ist. Diese Ausbildung des ferromagnetischen Körpers 16 als Begrenzungskäfig ist besonders vorteilhaft.

Grundsätzlich ist der geometrische Querschnitt der Magnet-Platten 13a, 13b beliebig, jedoch empfiehlt sich ein symmetrischer Körper, insbesondere eine Kreisscheibe.

Die Magnet-Platten 13a, 13b müssen auch nicht plan sein, sondern sie können auch sphärische Oberflächen aufweisen, wenn die Sphären besonders gestaltet sind, beispielsweise den selben Radius haben.

## Patentansprüche

1. Positionsmeßeinrichtung zur Messung der Relativlage zweier Objekte (2, 8), bei der die Teilung (6) eines mit dem einen Objekt (2) verbundenen Teilungsträgers (5) von einer Abtasteinheit (7) abgetastet wird, die am anderen Objekt (8) oder an einem daran angebrachten Mitnehmer (10) über eine in Meßrichtung (X) steife Kupplung (13) gelenkig angekoppelt und an einer von der Führung (15) der zu messenden Objekte (2, 8) unabhängigen Hilfsführung verschiebbar ist, und bei der die Kupplung (13) sich kontaktierende Kupplungsteile (13a, 13b, 13c,) aufweist und bei der ein erstes Kupplungsteil (13a) mit der Abtasteinheit (7) und ein zweites Kupplungsteil (13b) mit dem einen Objekt (2) oder mit dem Mitnehmer (10) verbunden sind, wobei zwischen dem ersten Kupplungsteil (13a) und dem zweiten Kupplungsteil (13b) ein drittes Kupplungsteil in Form einer Kugel (13c) vorgesehen ist, und die Kugel (13c) mit im wesentlichen quer zur Meßrichtung (X) verlaufenden Flächen der ersten beiden Kupplungsteile (13a, 13b) in ständigem Kontakt steht, dadurch gekennzeichnet, daß die Kugel (13c) aus ferromagnetischem Material besteht, daß die ersten beiden Kupplungsteile magnetisch sind und daß die Kugel im Zwischenraum der ersten beiden sich gegenüberliegenden Kupplungsteile (13a, 13b) angeordnet ist, so daß die Kugel durch Magnetkraft zwischen den ersten beiden Kupplungsteilen (13a, 13b) gehalten ist.

2. Positionsmeßeinrichtung nach Anspruch 1, dadurch gekennzeichnet, daß das erste und das zweite Kupplungsteil durch Magnet-Platten (13a, 13b) gebildet werden, zwischen denen die ferromagnetische Kugel (13c) quer zur Meßrichtung (X) frei rollbar ist.

3. Positionsmeßeinrichtung nach Anspruch 1, dadurch gekennzeichnet, daß die Kugel (13c) durch die Magnetkräfte der Magnet-Platten (13a, 13b) in deren Flächenzentrum ihre Ruhelage findet.

4. Positionsmeßeinrichtung nach einem der Ansprüche 1 bis 3, dadurch gekennzeichnet, daß die Kontaktflächen der Magnet-Platten (13a, 13b) Planflächen sind.

5. Positionsmeßeinrichtung nach einem der Ansprüche 1 bis 3, dadurch gekennzeichnet, daß die Kontaktflächen der Magnet-Platten sphärische Flächen sind.

6. Positionsmeßeinrichtung nach einem der Ansprüche 1 bis 5, dadurch gekennzeichnet, daß wenigstens eine der Magnet-Platten (13a) von einem ferromagnetischen Körper (16) derart umschlossen ist, daß der ferromagnetische Körper (16) einen Begrenzungs-Käfig für die Bewegung der Kugel (13c) bildet.

7. Positionsmeßeinrichtung nach einem der Ansprüche 1 bis 6, dadurch gekennzeichnet, daß die Kontaktflächen der Magnet-Platten (13a, 13b) kreisförmig sind.

8. Positionsmeßeinrichtung nach Anspruch 7, dadurch gekennzeichnet, daß die Durchmesser der Kugel (13c) und der Magnet-Platten (13a, 13b) ein Verhältnis von ca. 1:3 bis 1:2 haben.

## Claims

1. Position-measuring device for measuring the relative position of two objects (2,8), in which device the division (6) of a division carrier (5) connected to the one object (2) is scanned by a scanner unit (7) which is coupled in an articulated manner to the other object (8), or to a catch (10) connected thereto, via a coupling (13) which is rigid in the measuring direction (X), and which scanner unit may be displaced on an auxiliary guiding device independent of the guiding device of the objects to be measured, and in which the coupling (13) has coupling parts (13a, 13b, 13c) in contact with one another and in which a first coupling part (13a) is connected to the scanner unit (7) and a second coupling part (13b) is connected to the one object (2) or the catch (10), a third coupling part in the form of a ball (13c) being provided between the first coupling part (13a) and the second coupling part (13b), and the ball (13c) being in constant contact with surfaces, running substantially transversely to the measuring direction (X), of the first two coupling parts (13a,13b), **characterised in that** the ball (13c) consists of ferromagnetic material, in that the first two coupling parts are magnetic and in that the ball is disposed in the space between the first two opposite coupling parts (13a, 13b), in such a way that the ball is held between the first two coupling parts (13a,13b) by magnetic force.

2. Position-measuring device according to claim 1, **characterised in that** the first and second coupling parts are formed by magnet discs (13a, 13b), between which the ferromagnetic ball (13c) may be rolled freely transversely to the measuring direction (X).

3. Position-measuring device according to claim 1, **characterised in that** the ball (13c) finds its rest position through the magnetic forces of the magnetic discs (13a, 13b) in the centre of their surfaces.

4. Position-measuring device according to one of claims 1 to 3, **characterised in that** the contact surfaces of the magnetic discs (13a, 13b) are planar surfaces.

5. Position-measuring device according to one of claims 1 to 3, **characterised in that** the contact surfaces of the magnetic discs are spherical surfaces.

6. Position-measuring device according to one of claims 1 to 5, **characterised in that** at least one of the magnetic discs (13a) is enclosed by a ferromagnetic body (16) in such a way that the ferromagnetic body (16) forms a limiting cage for the movement of the ball (13c).

7. Position-measuring device according to one of claims 1 to 6, **characterised in that** the contact surfaces of the magnetic discs (13a, 13b) are circular.

8. Position-measuring device according to claim 7, **characterised in that** the diameters cf the ball (13c) and of the magnetic discs (13a, 13b) have a ratio of approx. 1:3 to 1:2.

## Revendications

1. Dispositif de mesure de position pour la mesure de la position relative de deux objets (2, 8), dans lequel les divisions (6) d'un support de divisions (5) lié à l'un des objets (2) sont palpées par une unité de palpage (7) qui est couplée de manière articulée à l'autre objet (8) ou à un entraîneur (10) monté sur celui-ci par l'intermédiaire d'un moyen de couplage (13) rigide dans la direction de mesure (X) et peut coulisser sur un moyen de guidage secondaire indépendant du moyen de guidage (15) des objets à mesurer (2, 8), dans lequel le moyen de couplage (13) comprend des éléments de couplage (13a, 13b, 13c) en contact réciproque et dans lequel un premier élément de couplage (13a) est lié à l'unité de palpage (7) et un deuxième élément de couplage (13b) est lié à l'un des objets (2) ou à l'entraîneur (10), un troisième élément de couplage sous la forme d'une bille (13c) étant prévu entre le premier élément de couplage (13a) et le deuxième élément de couplage (13b) et la bille (13c) étant en contact permanent avec des surfaces des deux premiers éléments de couplage (13a, 13b) qui s'étendent essentiellement transversalement à la direction de mesure (X), caractérisé par le fait que la bille (13c) est en un matériau ferromagnétique, que les deux premiers éléments de couplage sont magnétiques et que la bille est disposée dans l'espace intermédiaire entre les deux premiers éléments de couplage (13a 13b) en vis-à-vis, de telle sorte que la bille soit tenue par la force magnétique entre lesdits deux premiers éléments de couplage (13a, 13b).

2. Dispositif de mesure selon la revendication 1, caractérisé par le fait que le premier et le deuxième élément de couplage sont formés par des plaques magnétiques (13a, 13b) entre lesquelles la bille ferromagnétique (13c) peut rouler librement transversalement à la direction de mesure (X).

3. Dispositif de mesure selon la revendication 1, caractérisé par le fait que la bille (13c) trouve sa position de repos par les forces magnétiques des plaques magnétiques (13a, 13b), au centres desdites plaques magnétiques.

4. Dispositif de mesure selon une des revendications 1 à 3, caractérisé par le fait que les surfaces de contact des plaques magnétiques (13a, 13b) sont des surfaces planes.

5. Dispositif de mesure selon une des revendications 1 à 3, caractérisé par le fait que les surfaces de contact des plaques magnétiques (13a, 13b) sont des surfaces sphériques.

6. Dispositif de mesure selon une des revendications 1 à 5, caractérisé par le fait qu'au moins une des plaques magnétiques (13a) est entourée d'un corps (16) ferromagnétique, de telle sorte que le corps (16) ferromagnétique forme une cage limitant les déplacements pour la bille (13c).

7. Dispositif de mesure selon une des revendications 1 à 6, caractérisé par le fait que les surfaces de contact des plaques magnétiques (13a, 13b) sont circulaires.

8. Dispositif de mesure selon la revendication 7, caractérisé par le fait que les diamètres des billes (13c) et des plaques magnétiques (13a, 13b) sont dans un rapport d'environ 1:3 à 1:2.
